# EUROPÄISCHE PATENTANMELDUNG

(11) **EP 0 748 840 A1**
(43) Veröffentlichungstag der Anmeldung: **18.12.1996**
(21) Anmeldenummer: 96810340.8
(22) Anmeldetag: 28.05.1996
(51) Int. Cl.: C08K 13/02, C08K 3/34, C08K 5/092, C08K 5/57

(54) **Stabilisierung von Polymeren**

(30) Priorität: 07.06.1995 CH 19950001672
(71) Anmelder: CIBA-GEIGY AG, 4002 Basel (CH)
(72) Erfinder: Kaufhold, Johannes, 64678 Lindenfels (DE); Sander, Hans-Jürgen, 64653 Lorsch (DE)

(57) **Zusammenfassung**

Es werden Zusammensetzungen beschrieben, die
A) ein Polymer enthalten, sowie
B) mindestens eine Organozinnverbindung der Formel I, Ia, II oder IIa

R¹ᵢSnOⱼ (I)

bzw. [R¹SnO]ₘ (la)

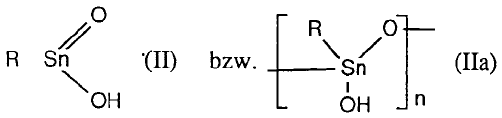

worin i 1 oder 2, j (4-i)/2, m > 1 und n > 3 sind,
R¹ und R unabhängig voneinander C₁-C₁₂-Alkyl bedeuten,

C) mindestens eine Dicarbonsäure der Formel III

HO-CO-R²-CO-OH (III)

und/oder deren Anhydrid
worin R² für unsubstituiertes oder mit C₁-C₄-Alkyl oder C₁-C₄-Alkoxy substituiertes Arylen, gerad- oder verzweigtkettiges Alkylen oder eine Gruppe der Formel -CH=CR³-darstellt,
R³ für Wasserstoff oder Methyl steht,

sowie
D) mindestens eine Verbindung aus der Reihe der kristallinen Alkali- und/oder Erdalkalialumosilikate.

Diese Zusammensetzungen weisen ein verbesserte thermische und mechanische Belastbarkeit auf und sind leicht zu verarbeiten.

## Beschreibung

Die Erfindung betrifft ein Verfahren zur Stabilisierung von Polymeren und stabilisierte Polymerzusammensetzungen.

Organozinnverbindungen werden üblicherweise bei der Stabilisierung von Polymeren, insbesondere von PVC und ABS eingesetzt. Dabei verfährt man beispielsweise folgendermaßen:
1. Primärstabilisatoren werden allein eingesetzt (im allgemeinen Organozinnmercaptide (vgl. z.B. DE-B-1806494)
2. Einsatz von Co-Stabilisatoren, d.h. von Substanzen, welche allein keine oder nur untergeordnete Wirkung zeigen (z. B. Thiophosphate, Thioacetale oder Phenole). Siehe dazu US 3,196,129, US 3,919,165 und DE-OS-1 669 677.
3. Kombination mit anionischen Komponenten führt zur "*in situ* Bildung" von Organozinnstabilisatoren (z.B. US 3,627,716, Spalte 7, DE-OS 2303179).

Es sind auch verschiedene Kombinationen von Organozinnstabilisatoren mit Zeolithen bekannt (z.B. DE 4,126 242, AU 6200 70 RO 94030 und JP 63-210 154).

Man ist ständig bestrebt, wirksame Stabilisatorkombinationen zu finden, welche einen größtmöglichen Schutz gegen den Abbau durch hohe Temperaturen und Scherkräfte (thermische und frikative Belastungen) bieten.

Es wurden nun eine mit geringem technischen Aufwand zugängliche Stabilisatorkombination und eine Stabilisierungsmethode gefunden, die es ermöglichen, Polymerschmelzen effizient gegen starke thermische und frikative Belastungen zu schützen. Darüber hinaus wird insbesondere chlorhaltigen Polymeren ausgezeichneter Lichtschutz verliehen.

Die Erfindung betrifft somit Zusammensetzungen enthaltend
A) ein Polymer,
B) mindestens eine Organozinnverbindung der Formel I, Ia, II oder IIa

   R¹ᵢSnOⱼ (I)

   bzw. [R¹ᵢSnOⱼ]ₘ (Ia)

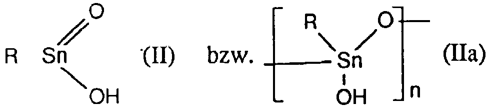

   worin i 1 oder 2, j (4-i)/2, m > 1 und n > 3 sind,
   R¹ und R unabhängig voneinander C₁-C₁₂-Alkyl bedeuten,
C) mindestens eine Dicarbonsäure der Formel III

   HO-CO-R²-CO-OH (III)

   und/oder deren Anhydrid
   worin R² für unsubstituiertes oder mit C₁-C₄-Alkyl oder C₁-C₄-Alkoxy substituiertes C₆-C₁₅-Arylen, gerad- oder verzweigtkettiges Alkylen oder eine Gruppe der Formel -CH=CR³- darstellt,
   R³ für Wasserstoff oder Methyl steht,
   sowie
D) mindestens eine Verbindung aus der Reihe der kristallinen Alkali- und/oder Erdalkalialumosilikate.

Die Indizes n und m sind nach oben offen, weil es sich bei den Oxiden und Stannonsäuren gewöhnlich um amorphe, koordinativ vernetzte Gitterstrukturen handelt. Dadurch können die Zahlenwerte von n und m sehr groß werden. In der Literatur werden obere Grenzen von um 1000 genannt (DE-OS 1669677). Eine Vorschrift zur Herstellung von dehydratisierter Butanstannonsäure (H₉C₄SnO_{1.5}) gibt das Molekulargewicht mit 3000 bis 4000 an, was einem Polymerisationsgrad von ca. 15 bis 20 entspricht (Houben-Weyl, Methoden der organischen Chemie, Vol XIII/6, Teil 2, S. 312). Zum Zweck der Darstellung chemischer Reaktionen bedient man sich zumeist der Formeln I und II und verzichtet wie bei Salzen auf den Hinweis auf die Festkörperstruktur. Grundsätzlich stellen die Formelpaare I und la bzw. II und IIa also jeweils dieselben Stoffe dar. Für die Verbindungen der Formel II wird auch die folgende Struktur postuliert: 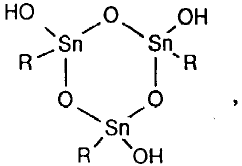 welche durch partielle Dehydratisierung zu 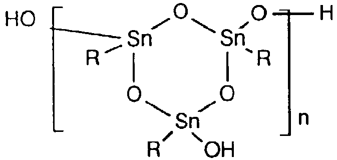 vernetzen kann.
R und R¹ als C₁-C₁₂Alkyl sind z. B. Methyl, Ethyl, Propyl, Butyl, Isobutyl, tert-Butyl, Pentyl, Hexyl, Heptyl, Octyl, Isooctyl, Decyl, Undecyl, Dodecyl oder 2-Ethylhexyl. R und R¹ haben bevorzugt die Bedeutung von Butyl oder Octyl.
R² als C₆-C₁₅-Arylen bedeutet etwa o-, m- oder p-Phenylen, 1,4-Naphthylen oder 4,4'-Diphenylen. C₁-C₄-Alkoxy bedeutet Methoxy, Ethoxy, Propoxy oder Butoxy.
R² als Alkylen bedeutet einen zweiwertigen Alkylrest im Rahmen der angegebenen Kettenlängen, z.B. Methylen, Ethylen, -CH(CH₃)-CH₂-, -(CH₂)₃-, -(CH₂)₄-, -(CH₂)₆-, -(CH₂)₈-, -CH₂-CH(C₂H₅)-(CH₂)₄-, -CH₂-C(CH₃)₂-CH₂-; bevorzugt sind geradkettige Reste, besonders C₂-C₁₂-Alkylen. Dabei handelt es sich z.B. um Ethylen, Trimethylen, Tetramethylen, Hexamethylen, Octamethylen, Decamethylen oder Dodecamethylen.

Bevorzugt enthalten die erfindungsgemäßen Zusammensetzungen als Verbindungen der Komponente B) solche der Formel I, worin
R¹ Butyl oder Octyl ist
oder solche , worin i 2 ist,
und als Komponente C) solche, worin
R² C₁-C₄-Alkylen oder -CH=CH- ist.

Komponente A) ist ein natürliches, halbsynthetisches oder synthetisches Polymer, zweckmäßig ein synthetisches, bevorzugt PVC, ABS, ein Polymer auf Basis der Acrylsäure oder deren Ester, besonders PMMA-enthaltende Polymere, oder Blends aus mindestens zwei der genannten Polymertypen.

Als Polymere kommen somit in Frage:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, IIa und/oder IIIa sind. Die Aktivatoren können beispielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/ HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Co-polymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinyl-acetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/ EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Besonders geeignet ist sind Komponente A) chlorhaltige Polymere. Als solche können beispielsweise aufgezählt werden: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alphasubstituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Die verwendeten Abkürzungen für die Copolymerisate sind dem Fachmann geläufig.

Die erfindungsgemäße Zusammensetzung kann weitere Copolymerisate als Modifikatoren enthalten. Ebenso möglich ist es, die oben genannten Copolymerisate selbst in modifizierter Form einzusetzen. Der Einsatz von Modifikatoren, beispielsweise als Blends oder als Pfropf-Copolymerisate, zur Verbesserung der Gebrauchseigenschaften ist dem Fachmann bekannt. Es können insbesondere bis zu 20 Gewichtsteile, bezogen auf A), an Modifikatoren vorhanden sein.

Die Verbindungen der Komponente B) sind bekannt bzw. nach bekannten Verfahren herstellbar. Sie sind z.T. kommerziell erhältlich.

Beispiele für Verbindungen der Komponente B) sind
Di-n-butylzinnoxid und Di-n-octylzinnoxid.

Komponente B) ist zweckmäßig zu 0,2 bis 2 Gewichtsteilen, bezogen auf das Polymer, in der Zusammensetzung vorhanden.

Die Dicarbonsäure der Komponente C) ist beispielsweise Malonsäure, Bernsteinsäure, Glutarsäure-, Adipinsäure-, Korksäure, Sebacinsäure, Maleinsäure, Itaconsäure, Phthalsäure, Dibutylmalonsäure, Dibenzylmalonsäure, Butyl-(3,5-di-tert.-butyl-4-hydroxybenzyl)-malonsäure oder Bicycloheptendicarbonsäure. Bevorzugt ist Maleinsäure.

Der Begriff Alkali-/Erdalkali-alumosilikate umfaßt sowohl Alkali-alumosilikate, wie Erdalkali-alumosilikate sowie Alumosilikate, welche Alkali- und Erdalkalimetalle enthalten. Die Alkali-/Erdalkali-alumosilikate können natürlichen oder synthetischen Ursprungs sein.

Bei den Alumosilikaten der Komponente D) handelt es sich vorzugsweise um Zeolithe und Hydrotalcite. Als Verbindungen aus der Reihe der Hydrotalcite oder Zeolithe kommen sowohl die natürlich vorkommenden Mineralien als auch synthetisch hergestellte Verbindungen in Betracht.

Die chemische Zusammensetzung der Hydrotalcite und Zeolithe ist dem Fachmann bekannt.

Verbindungen aus der Reihe der Hydrotalcite können durch die allgemeine Formel IV,

M²⁺¹₁₋ₓ·M³⁺ₓ·(OH)²·(Aⁿ⁻)_{x/n}·mH₂O (IV)

beschrieben werden,
wobei
- M²⁺: = Mg, Ca, Sr, Zn, Sn und/oder Ni ist,
- M³⁺: = Al, B oder Bi ist,
- Aⁿ: ein Anion mit der Valenz n darstellt,
- n: eine Zahl von 1-4 ist,
- x: eine Zahl von 0-0,5 ist,
- m: eine Zahl von 0-2 ist.
Bevorzugt ist
Aⁿ = OH⁻, Cl⁻, Br⁻, I⁻, ClO₄⁻, HCO₃⁻, CH₃COO⁻, C₆H₅COO⁻, CO₃²⁻, SO₄²⁻, 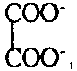 (CHOHCOO)₂²⁻, (CHOH)₄CH₂OHCOO⁻. C₂H₄(COO)₂²⁻, (CH₂COO)₂²⁻, CH₃CHOHCOO⁻, SiO₃²⁻, SiO₄⁴⁻, Fe (CN)₆³⁻, Fe(CN)₆⁴⁻ oder HPO₄²⁻ darstellt; weitere Beispiele finden sich in DE 41 06 403.

Andere Hydrotalcite, die zweckmäßig eingesetzt werden können, sind Verbindungen mit der allgemeinen Formel IVa, 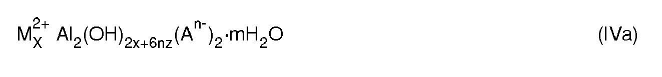 wobei in vorliegender Formel IVa M²⁺ wenigstens ein Metall aus der Reihe von Mg und Zn darstellt und Mg bevorzugt ist, Aⁿ⁻ ein Anion, beispielsweise aus der Reihe von CO₃²⁻, 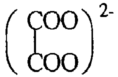 OH⁻ und S²⁻ darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel IV, 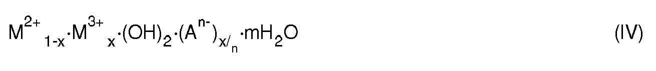 wobei M²⁺ die Bedeutung von Mg oder einer festen Lösung von Mg und Zn hat, Aⁿ⁻ für CO₃²⁻ steht, x eine Zahl von 0 bis 0,5 ist und m eine Zahl von 0 bis 2 ist.

Beispiele für Hydrotalcite sind

Al₂O₃·6MgO·CO₂·12H₂O,

Mg_{4,5}Al₂(OH)₁₃·CO₃·3,5H₂O,

4MgO·Al₂O₃·CO₂·9H₂O,

4MgO·Al₂O₃·CO₂·6H₂O,

ZnO·3MgO·Al₂O₃·CO₂·8-9H₂O

oder

ZnO·3MgO·Al₂O₃·CO₂·5-6H₂O.

Bevorzugt sind als Komponente D) Verbindungen aus der Reihe der Zeolithe. Zeolithe können durch die allgemeine Formel (V)

M_{x/n}[(AlO₂)ₓ(SiO₂)_{y}]·wH₂O (V)

beschrieben werden,
worin n die Ladung des Kations M;
M ein Element der ersten oder zweiten Hauptgruppe, wie Li, Na, K, Mg, Ca, Sr oder Ba;
y : x eine Zahl von 0,8 bis 15, bevorzugt von 0,8 bis 1,2; und
w eine Zahl von 0 bis 300, bevorzugt von 0,5 bis 30, ist.

Beispiele für Zeolithe sind Natriumalumosilikate der Formeln

Na₁₂Al₁₂Si₁₂O₄₈·27H₂O [Zeolith A],

Na₆Al₆Si₆O₂₄·2NaX·7,5 H₂O, X= OH, Halogen, ClO₄ [Sodalith]

Na₆Al₆Si₃₀O₇₂·24 H₂O,

Na₈Al₈Si₄₀O₉₆·24 H₂O,

Na₁₆Al₁₆Si₂₄O₈₀·16H₂O,

Na₁₆Al₁₆Si₃₂O₉₆·16H₂O,

Na₅₆Al₅₆Si₁₃₆O₃₈₄·250 H₂O, [Zeolith Y]

Na₈₆Al₈₆Si₁₀₆O₃₈₄·264H₂O [Zeolith X]

oder die durch teilweisen bzw. vollständigen Austausch der Na-Atome durch Li-, K-, Mg-, Ca-, Sr- oder Zn-Atome darstellbaren Zeolithe wie

(Na,K)₁₀Al₁₀Si₂₂O₆₄·20H₂O.

Ca_{4,5}Na₃[(AlO₂)₁₂(SiO₂)₁₂]·30H₂O

KgNa₃[(AlO₂)₁₂(SiO₂)₁₂]·27H₂O

Besonders bevorzugt verwendet man Zeolith A.

Komponente D) kann in einer Menge von beispielsweise 0,1 bis 10, bevorzugt 1 bis 6 Gew.-Teilen, bezogen auf 100 Gew.-Teile Polymer A), angewandt werden.

Die erfindungsgemäße Zusammensetzung enthält die Komponenten B) und C) bevorzugt im Molverhältnis B) : C) = 1,1 : 1 bis 0,5 : 1.

Die Herstellung der erfindungsgemäßen Zusammensetzungen erfolgt nach bekannten Verfahren. Die Stabilisatoren werden den Polymerblends vor der Verarbeitung in bekannter Weise zugemischt. Eine homogene Mischung kann z.B. vor der Verarbeitung mit Hilfe eines Heiz-Kühl-Mischers bei üblicherweise bis 120°C in der Heizphase erhalten werden.

Die erfindungsgemäßen Zusammensetzungen können vorteilhafterweise auch übliche Mengen weiterer, herkömmlicher Stabilisatoren und/oder weiterer Zusätze enthalten, beispielsweise Weichmacher, Epoxyverbindungen, Metalldesaktivatoren, Phosphite und Phosphonite, peroxidzerstörende Verbindungen, Polyamidstabilisatoren, basische Co-Stabilisatoren, Nukleierungsmittel, Füllstoffe und Verstärkungsmittel, Gleitmittel, Emulgatoren, Pigmente, Verarbeitungshilfen, Antioxidantien, Optische Aufheller, Flammschutzmittel, Antistatika, Treibmittel, Benzofuranone bzw. Indolinone, Metallcarboxylate und Metallphenolate von Metallen der zweiten Haupt- und Nebengruppe des Periodensystems, oder auch anorganische Salze von Metallen der zweiten Nebengruppe des Periodensystems.

Solche weiteren Stabilisatoren oder Zusätze werden bevorzugt in Mengen von jeweils 0,05 bis 6, insbesondere 0,1 bis 3 %, bezogen auf die gesamte Zusammensetzung, eingearbeitet

Je nach dem Verwendungszweck der erfindungsgemäßen Zusammensetzungen können vor oder mit der Einarbeitung des Stabilisators auch noch weitere Zusätze eingearbeitet werden, wie z.B. Gleitmittel (bevorzugt Montanwachse oder Glycerinester), Fettsäureester, Paraffine, Weichmacher, Füllstoffe, Ruß, Kaolin, Talk, Silikate, Glasfasern, Modifikatoren, optische Aufheller, Pigmente, Lichtstabilisatoren, UV-Absorber, Flammschutzmittel oder Antistatika.

Bevorzugte derartige Zusätze sind Gleitmittel, Pigmente, Verarbeitungshilfen, Füllstoffe, Antioxidantien und/oder Lichtschutzmittel.

Die Komponenten B) und C) und D) der erfindungsgemäßen Zusammensetzungen sowie optionale Zusätze können den zu stabilisierenden Polymeren auch in Form eines Masterbatches zugesetzt werden. Dieser kann beispielsweise 1 bis 40 Gew.-% der Komponente B), 1 bis 40 Gew.-% der Komponente C), 1 bis 20 Gew.-% der Komponente D), und Polymere der Komponente A), Costabilisatoren wie Verarbeitungshilfen, Gleitmittel, Flammschutzmittel, Schlagzähigkeitsmodifikatoren oder eine Kombination dieser Stoffe enthalten.

Die Erfindung betrifft somit auch eine Stabilisatorkombination für Polymere, enthaltend die anfangs beschriebenen Komponenten B), C) und D), sowie ggf. weitere Zusätze, wie z.B. die erwähnten Verarbeitungshilfen, Gleitmittel, Flammschutzmittel oder Schlagzähigkeitsmodifikatoren.

Die erfindungsgemäßen Zusammensetzungen können nach den dafür gebräuchlichen Formgebungsverfahren, z.B. durch Spritzgießen, Kalandrieren oder Extrusion, Sintern oder Extrusions-Blasen,zu Formteilen verarbeitet werden. Die Zusammensetzungen können auch zu Fasern und Schäumen verarbeitet bzw. versponnnen werden. Die Erfindung betrifft somit auch die Verwendung der Zusammensetzungen zur Herstellung von Kunststoffartikeln.

Die Erfindung betrifft auch ein Verfahren zum Stabilisieren von Polymeren, indem eine Stabiliatorkombination aus den anfangs beschriebenen Komponenten B), C) und D) dem Polymermaterial zugegeben wird. Die Zugabe der Komponenten B), C) und D) kann dabei einzeln, paarweise oder zusammen vor und/oder während der Verarbeitung erfolgen. Die drei genannten Komponentenn können auch in Form eines Masterbatches - wie oben beschrieben - zugegeben werden. Ein weiterer Gegenstand der Erfindung ist somit die Verwendung der anfangs beschriebenen Komponenten B), C) und D) zum Stabilisieren von Polymeren.

Bevorzugte Stabilisatorkombinationen, bevorzugte Verfahren und bevorzugte Verwendungen ergeben sich aus den oben beschriebenen bevorzugten Zusammensetzungen.

Gemeinsam mit den Verbindungen der Komponente B) können in den erfindungsgemäßen Zusammensetzungen auch noch weitere Zinnstabilisatoren enthalten sein, sofern sie die durch die genannten Verbindungen erzielten verbesserten Eigenschaften nicht nachteilig beeinflussen. Bevorzugt sind jedoch die erfindungsgemäßen Zusammensetzungen, welche neben den oben beschriebenen Zinnverbindungen der Komponente B) keine weiteren Zinnstabilisatoren enthalten.

Die folgenden Beispiele erläutern die Erfindung weiter, ohne sie jedoch in irgendeiner Weise zu beschränken. Teile und Prozente beziehen sich, wie auch in der übrigen Beschreibung, auf das Gewicht, sofern nichts anderes angegeben ist.

### Beispiel 1:

Die Grundrezeptur wird jeweils mit den Stabilisatorkomponenten bei 120°C in einem Mischer homogenisiert. Dann wird innerhalb fünf Minuten in einem Laborwalzwerk geliert. Das Polymer wird in weiteren 5 min zu 0,4 mm dicken Folien ausgewalzt. Aus diesen Folien werden Prüfstreifen herausgeschnitten, welche bei 190°C in einem Mathis-Thermo-Takter-Ofen (Taktzeit 5 min, Taktweg 15 mm) thermisch belastet werden. Das Abbauverhalten als Funktion der Zeit [min] wird anhand der Yellowness Indices (YI nach ASTM 1925-70 bzw.

DIN 5033) ermittelt. Geringe Yellowness Indices bedeuten gute Wirkung des Stabilisators. Die Ergebnisse sind folgender Tabelle I zu entnehmen:

**Tabelle I (Angaben in Gew.-Teilen)**

| **Statischer Hitzetest bei 190°C** | | |
|---|---|---|
| Mischung | **1** | **2** |
| PVC (K-Wert 60) | 100 | 100 |
| Schlagzähigkeitsmodifikator | 6,0 | 6,0 |
| Polymethymethacrylat-Fließhilfe | 1,0 | 1,0 |
| Wachsester | 1,0 | 1,0 |
| polares inneres Gleitmittel | 1,2 | 1,2 |
| | | |
| Di-n-octylzinnoxid | 0,8 | 0,8 |
| Maleinsäureanhydrid | -- | 0,2 |
| Zeolith A | -- | 1,0 |
| | | |
| **YI nach 0 Min.** | **88,2** | **40,6** |
| **YI nach 5 Min.** | **90,1** | **43,6** |
| **YI nach 10 Min.** | **92,5** | **45,5** |
| **YI nach 15 Min.** | **99,1** | **51,9** |
| **YI nach 20 Min.** | **113,8** | **60,4** |
| **YI nach 25 Min.** | **Zersetzung** | **76,9** |
| **YI nach 30 Min.** | **"** | **101,4** |
| **YI nach 35 Min.** | **"** | **121,0** |

Es zeigt sich, daß die Mischung 2 wesentlich besser stabilisiert ist als die Mischung 1.

## Patentansprüche

1. Zusammensetzungen enthaltend
A) ein Polymer,
B) mindestens eine Organozinnverbindung der Formel I, Ia, II oder IIa
R¹ᵢSnOⱼ (I)
bzw. [R¹ᵢSnOⱼ]ₘ (Ia) 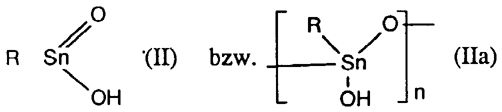
worin i 1 oder 2, j (4-i)/2, m > 1 und n > 3 sind,
R¹ und R unabhängig voneinander C₁-C₁₂-Alkyl bedeuten,
C) mindestens eine Dicarbonsäure der Formel III
HO-CO-R²-CO-OH (III)
und/oder deren Anhydrid
worin R² für unsubstituiertes oder mit C₁-C₄-Alkyl oder C₁-C₄-Alkoxy substituiertes Arylen, gerad- oder verzweigtkettiges Alkylen oder eine Gruppe der Formel -CH=CR³- darstellt,
R³ für Wasserstoff oder Methyl steht,
sowie
D) mindestens eine Verbindung aus der Reihe der kristallinen Alkali- und/oder Erdalkalialumosilikate.

2. Zusammensetzungen gemäß Anspruch 1, worin in Formel I
R¹ Butyl oder Octyl ist.

3. Zusammensetzungen gemäß Anspruch 1, worin
i 2 ist.

4. Zusammensetzungen gemäß Anspruch 1, worin
R² C₁-C₄-Alkylen oder -CH=CH- ist.

5. Zusammensetzungen gemäß Anspruch 1, enthaltend als Komponente A) PVC, ABS, ein Polymer auf Basis der Acrylsäure oder deren Ester oder eine Mischung (Blend) aus mindestens zwei dieser Polymertypen.

6. Zusammensetzungen gemäß Anspruch 1, enthaltend 0,2 bis 2,0 Gew.-Teile der Komponente B), bezogen auf 100 Teile A).

7. Zusammensetzungen gemäß Anspruch 1, enthaltend die Komponenten B) und C) im molaren Verhältnis B) : C) von 1,1 : 1 bis 0,5 : 1.

8. Zusammensetzungen gemäß Anspruch 1, enthaltend als Komponente D) einen Zeolithen.

9. Zusammensetzungen gemäß Anspruch 1, enthaltend als Komponente D) "Zeolith A".

10. Zusammensetzungen gemäß Anspruch 1, enthaltend 1 bis 6 Teile D pro 100 Teile A).

11. Zusammensetzungen gemäß Anspruch 1, enthaltend zusätzlich Weichmacher, Epoxyverbindungen, Metalldesaktivatoren, Phosphite und Phosphonite, peroxidzerstörende Verbindungen, Polyamidstabilisatoren, basische CoStabilisatoren, Nukleierungsmittel, Füllstoffe und Verstärkungsmittel, Gleitmittel, Emulgatoren, Pigmente, Verarbeitungshilfen optische Aufheller, Flammschutzmittel, Antistatika, Treibmittel, Benzofuranone bzw. Indolinone, Metallcarboxylate und Metallphenolate,
Antioxidantien und/oder Lichtschutzmittel.

12. Verwendung von Zusammensetzungen nach einem der Ansprüche 1-11 zur Herstellung von Kunststoffartikeln.

13. Verwendung derKomponenten B), C), und D) gemäß Anspruch 1 zum Stabilisieren von Polymeren.

14. Stabilisatorkombination für Polymere, enthaltend die Komponenten B), C) und D) gemäß Anspruch 1.

15. Verfahren zum Stabilisieren von Polymeren, **dadurch gekennzeichnet, daß** dem Polymeren eine Stabilisatorkombination gemäß Anspruch 14 zugegeben wird.
